# EUROPÄISCHE PATENTSCHRIFT

(11) **EP 3 760 390 B1**
(45) Veröffentlichungstag und Bekanntmachung des Hinweises auf die Patenterteilung: **11.02.2026**
(21) Anmeldenummer: 20178689.4
(22) Anmeldetag: 08.06.2020
(51) Int. Cl.: B25J 9/16

(54) **DURCHFÜHREN EINER VORGEGEBENEN AUFGABE MITHILFE WENIGSTENS EINES ROBOTERS**
PERFORMANCE OF A PREDETERMINED TASK USING AT LEAST ONE ROBOT
EXÉCUTION D'UNE TÂCHE PRÉDÉTERMINÉE À L'AIDE D'AU MOINS UN ROBOT

(30) Priorität: 01.07.2019 DE 102019209616
(43) Veröffentlichungstag der Anmeldung: 06.01.2021
(73) Patentinhaber: KUKA Deutschland GmbH, 86165 Augsburg (DE)
(72) Erfinder: KASPAR, Manuel, 86343 Königsbrunn (DE); VENET, Pierre, 86152 AUGSBURG (DE)
(74) Vertreter: Wallinger Ricker Schlotter Tostmann

(56) Entgegenhaltungen:
- EP-A1- 1 724 676
- EP-A1- 3 719 592
- WO-A1-2006/043873
- WO-A1-2019/096637
- CN-A- 108 052 004
- DE-U1- 202017 106 132
- STEVEN BOHEZ ET AL: "Sensor Fusion for Robot Control through Deep Reinforcement Learning", ARXIV.ORG, CORNELL UNIVERSITY LIBRARY, 201 OLIN LIBRARY CORNELL UNIVERSITY ITHACA, NY 14853, 13 March 2017 (2017-03-13), XP080756705, DOI: 10.1109/IROS.2017.8206048
- RYOU GILHYUN ET AL: "Applying Asynchronous Deep Classification Networks and Gaming Reinforcement Learning-Based Motion Planners to Mobile Robots", 2018 IEEE INTERNATIONAL CONFERENCE ON ROBOTICS AND AUTOMATION (ICRA), IEEE, 21 May 2018 (2018-05-21), pages 6268 - 6275, XP033403292, DOI: 10.1109/ICRA.2018.8460798
- PAUL SOMDYUTI ET AL: "Deterministic Policy Gradient Based Robotic Path Planning with Continuous Action Spaces", 2017 IEEE INTERNATIONAL CONFERENCE ON COMPUTER VISION WORKSHOPS (ICCVW), IEEE, 22 October 2017 (2017-10-22), pages 725 - 733, XP033303516, DOI: 10.1109/ICCVW.2017.91
- TANWANI AJAY KUMAR ET AL: "A Fog Robotics Approach to Deep Robot Learning: Application to Object Recognition and Grasp Planning in Surface Decluttering", 2019 INTERNATIONAL CONFERENCE ON ROBOTICS AND AUTOMATION (ICRA), IEEE, 20 May 2019 (2019-05-20), pages 4559 - 4566, XP033593657, [retrieved on 20190809], DOI: 10.1109/ICRA.2019.8793690
- BEDENBENDER HEINZ ET AL: "verwaltungsschale-in-der-praxis Version 1.0", PLATTFORM INDUSTRIE 4.0, 30 April 2019 (2019-04-30), pages 1 - 115, XP093128341, Retrieved from the Internet <URL:https://www.plattform-i40.de/IP/Redaktion/DE/Downloads/Publikation/2019-verwaltungsschale-in-der-praxis.pdf?__blob=publicationFile&v=1> [retrieved on 20240207]
- ANONYMOUS: "Industrial/Tutorials/Create_a_MoveIt_Pkg_for_an_Industrial_Robot - ROS Wiki", 6 July 2018 (2018-07-06), XP093310576, Retrieved from the Internet <URL:https://wiki.ros.org/Industrial/Tutorials/Create_a_MoveIt_Pkg_for_an_Industrial_Robot>
- ANONYMOUS: "arm_navigation/Tutorials/tools/Planning Description Configuration Wizard - ROS Wiki", 16 February 2012 (2012-02-16), XP093310582, Retrieved from the Internet <URL:https://wiki.ros.org/arm_navigation/Tutorials/tools/Planning%20Description%20Configuration%20Wizard>

## Beschreibung

Die vorliegende Erfindung betrifft ein Verfahren zum Konfigurieren einer Steuerung eines Roboters zum Durchführen einer vorgegebenen Aufgabe, ein Verfahren zum Durchführen einer vorgegebenen Aufgabe mithilfe wenigstens eines Roboters mit einer entsprechend konfigurierten Steuerung sowie ein System und ein Computerprogrammprodukt zur Durchführung eines entsprechenden Verfahrens.

Um vorgegebene Aufgaben durchzuführen, müssen Steuerungen von Robotern entsprechend konfiguriert werden, herkömmlicherweise durch manuelles Erstellen von Roboterprogrammen oder dergleichen.

S. Bohez et al: "Sensor Fusion for Robot Control through Deep Reinforcement Learning", DE 20 2017 106132 U1, CN 108 052 004 A, G. Ryou et: "Applving Asynchronous Deep Classification Networks and Gaming Reinforcement Learning-Based Motion Planners to Mobile Robots", 2018 IEEE Int. Conf. on Robotics and Automation (ICRA), 21-25 Mai 2018, Brisbane, Australia, und A.L. Tanwani et al: "A Fog Robotics Approach to Deep Robot Learning: Application to Object Recognition and Grasp Planning in Surface Decluttering", 2019 Int. Conf. on Robotics and Automation (ICRA) Palais des conares de Montreal, Montreal, Canada, 20-24 März 2019 betreffen die Anwendung von maschinellem Lernen bei Robotern.

Eine Aufgabe einer Ausführung der vorliegenden Erfindung ist es, das Konfigurieren einer Steuerung eines Roboters zum Durchführen einer vorgegebenen Aufgabe zu verbessern. Eine Aufgabe einer anderen Ausführung der vorliegenden Erfindung ist es, das Durchführen einer vorgegebenen Aufgabe mithilfe wenigstens eines Roboters zu verbessern.

Diese Aufgaben werden durch ein Verfahren mit den Merkmalen des Anspruchs 1 bzw. 8 gelöst. Ansprüche 9, 10 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung weist ein Verfahren zum Konfigurieren einer Steuerung eines Roboters zum Durchführen einer vorgegebenen Aufgabe die Schritte auf:
- Erfassen wenigstens eines ein- oder mehrdimensionalen Roboterparameters und wenigstens eines ein- oder mehrdimensionalen Umweltmodelparameters;
- Trainieren eines (KI-)Agenten mithilfe einer oder mehrerer Simulationen auf Basis dieses erfassten Roboterparameters und dieses erfassten Umweltmodelparameters mittels maschinellen Lernens auf Basis einer vorgegebenen Kostenfunktion; und
- Konfigurieren der Steuerung des Roboters auf Basis des trainierten Agenten.

Durch das Trainieren eines Agenten mittels maschinellen Lernens mithilfe einer oder mehrerer Simulationen kann in einer Ausführung eine Steuerung eines Roboters zum Durchführen einer vorgegebenen Aufgabe besonders vorteilhaft konfiguriert werden.

Der Roboter weist in einer Ausführung eine stationäre oder mobile, insbesondere fahrbare, Basis und/oder einen Roboterarm mit wenigstens drei, insbesondere wenigstens sechs, in einer Ausführung wenigstens sieben Gelenken bzw. (Bewegungs)Achsen, in einer Ausführung Drehgelenken bzw. -achsen, auf. Für solche Roboter ist die vorliegende Erfindung aufgrund ihrer Kinematik, Variabilität und/oder Komplexität besonders geeignet.

In einer Ausführung weist die vorgegebene Aufgabe wenigstens eine Bewegung des Roboters, insbesondere wenigstens einen planmäßigen Umgebungskontakt des Roboters, auf, kann also insbesondere ein robotergestütztes Greifen und/oder Fügen aufweisen. Für solche Aufgaben ist die vorliegende Erfindung aufgrund ihrer Komplexität besonders geeignet.

In einer Ausführung weist der Roboterparameter
- einen ein- oder mehrdimensionalen kinematischen, insbesondere dynamischen, Robotermodellparameter, insbesondere eine oder mehrere Achsabstände, Massen, Massenschwerpunkte, Trägheiten und/oder Steifigkeiten; und/oder
- einen ein- oder mehrdimensionalen kinematischen, insbesondere dynamischen, Lastmodellparameter, insbesondere eine oder mehrere Abmessungen, Massen, Massenschwerpunkte und/oder Trägheiten; und/oder
- eine aktuelle Roboterpose, insbesondere eine oder mehrere aktuelle Achs- bzw. Gelenkstellungen; und/oder
- eine aktuelle Roboterbetriebszeit auf.

Zusätzlich oder alternativ weist in einer Ausführung der Umweltmodelparameter einen ein- oder mehrdimensionalen CAD-Modellparameter und/oder eine, insbesondere aktuelle, Roboterpositionierung in dem Umgebungsmodell auf und/oder wird mithilfe wenigstens eines optischen Sensors, insbesondere einer Kamera, ermittelt.

In einer Weiterbildung wird dieser optische Sensor von einer Person geführt, insbesondere gehalten bzw. -tragen, in einer anderen Weiterbildung von einem Roboter, welcher seinerseits in einer Ausführung hierzu eine programmierte oder automatisch, insbesondere mittels einer Kollisionsvermeidung, ermittelte Bahn abfährt oder hand- bzw. durch manuell auf den Roboter ausgeübte Kräfte geführt wird bzw. ist.

In einer Ausführung weist der Agent ein künstliches neuronales Netz auf. In einer Weiterbildung wird dann die Steuerung des Roboters auf Basis der Struktur und/oder Gewichtungen des trainierten Netzes konfiguriert, diese Struktur und/oder Gewichtungen in einer Ausführung auf die Steuerung des Roboters übertragen: Zusätzlich oder alternativ wird der Agent in einer Ausführung mithilfe von Reinforcement Learning, vorzugsweise Deep Reinforcement Learning, trainiert.

In einer Ausführung wird die Steuerung des Roboters, nachdem sie in hier beschriebener Weise konfiguriert worden ist, mittels maschinellem Lernen, insbesondere Reinforcement Learning, vorzugsweise Deep Reinforcement Learning, mithilfe des realen Roboters weiter trainiert.

In einer Ausführung weisen einer oder mehrere der Verfahrensschritte eine Anwendereingabeunterstützung durch einen Software-Assistenten, insbesondere eine Benutzeroberflächenführung, auf, insbesondere also einen sogenannten Wizard. Zusätzlich oder alternativ ist, insbesondere wird, in einer Ausführung der Roboterparameter und/oder Umweltmodelparameter wenigstens temporär in einer Verwaltungsschale und/oder in einer Daten-Cloud gespeichert.

Nach einer Ausführung der vorliegenden Erfindung ist, insbesondere wird, bei einem Verfahren zum Durchführen einer vorgegebenen Aufgabe mithilfe wenigstens eines Roboters eine Steuerung des Roboters nach einem hier beschriebenen Verfahren konfiguriert. Entsprechend kann in einer Ausführung ein erfindungsgemäßes Verfahren ein hier beschriebenes Verfahren zum Konfigurieren einer Steuerung eines Roboters zum Durchführen einer vorgegebenen Aufgabe sowie den Schritt des Durchführens der vorgegebenen Aufgabe mithilfe des Roboters mit der erfindungsgemäß konfigurierten Steuerung aufweisen.

Nach einer Ausführung der vorliegenden Erfindung ist ein System, insbesondere hard- und/oder software-, insbesondere programmtechnisch, zur Durchführung eines hier beschriebenen Verfahrens eingerichtet. Es weist in einer Ausführung Mittel zum Erfassen wenigstens eines Roboterparameters und wenigstens eines Umweltmodelparameters; Mittel zum Trainieren eines Agenten mithilfe wenigstens einer Simulation auf Basis des erfassten Roboterparameters und Umweltmodelparameters mittels maschinellen Lernens auf Basis einer vorgegebenen Kostenfunktion; und Mittel zum Konfigurieren der Steuerung des Roboters auf Basis des trainierten Agenten auf.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere die Steuerung konfigurieren bzw. den Roboter betreiben bzw. steuern kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

In einer Ausführung weist das System den Roboter auf.

In einer Ausführung wird ein Framework geschaffen, das es ermöglicht, ein Motion bzw. Task Learning mittels Verfahren des Reinforcement Learnings effizient(er) zu realisieren. In einer Ausführung werden einfach und effizient Parameter des Roboters abgefragt und/oder das Umweltmodell erfasst. Insbesondere, um effizient(er) und schnell(er) zu lernen und/oder das reale System nicht zu blockieren, wird dies in einer Ausführung nicht auf dem realen System durchgeführt, sondern in einer Cloud-Simulationsumgebung. Dies kann vorteilhafte eine Parallelisierung des Lernprozesses und dadurch eine vorteilhafte Geschwindigkeitssteigerung und insbesondere hierdurch (durch Randomisierung von Parametern) ein robusteres Modell ermöglichen.

Weitere Vorteile und Merkmale ergeben sich aus den Unteransprüchen und den Ausführungsbeispielen. Hierzu zeigt, teilweise schematisiert:
- Fig. 1:: ein System nach einer Ausführung der vorliegenden Erfindung;
- Fig. 2:: Teile des Systems; und
- Fig. 3:: ein Verfahren nach einer Ausführung der vorliegenden Erfindung.

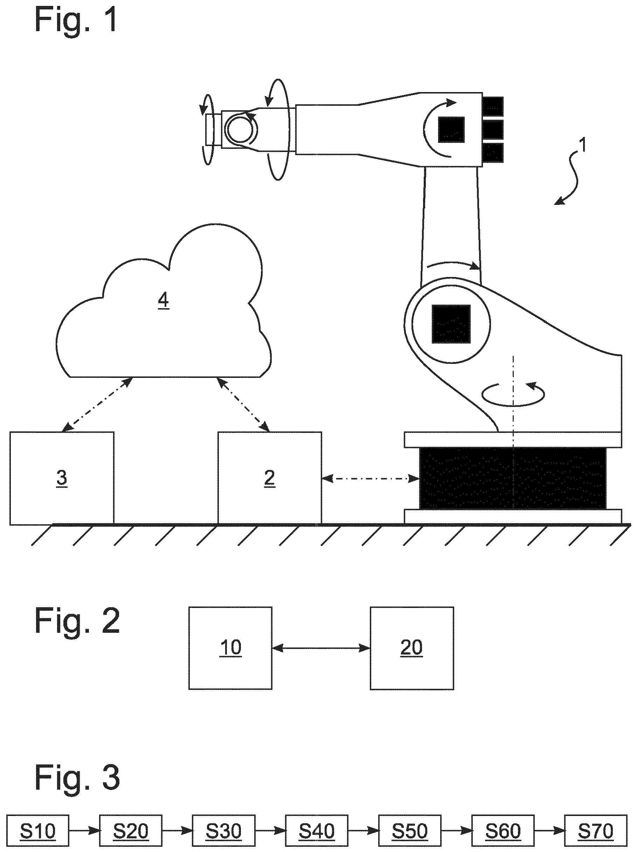

Fig. 1 zeigt ein System nach einer Ausführung der vorliegenden Erfindung mit einem Roboter 1, einer (Roboter)Steuerung 2, die mit dem Roboter 1 und einer Cloud 4 kommuniziert und einer Datenein-/ausgabe- und -verarbeitungseinrichtung, insbesondere einem Computer 3.

Auf dessen Benutzeroberfläche läuft ein Wizard, der einen Nutzer durch den Prozess leitet:
In einem ersten Schritt (Fig. 3: S10) werden ein Roboterparameter und eine Startkonfiguration erfasst. Um das Motion-Learning in einer Simulationsumgebung vorteilhaft durchzuführen, sollten sowohl Parameter des Roboters wie auch das Umweltmodell möglichst exakt in der Cloud-Simulationsumgebung verfügbar sein.

Dabei werden mithilfe einer sog. Verwaltungsschale ("Asset Administration Shell"; AAS), auch Digitaler Zwilling genannt, Zustands- und Verwaltungsdaten des Roboters 1 gespeichert. Vorteilhaft wird hierfür ein OPC UA Informationsmodell verwendet. In der Verwaltungsschale des Roboters sind Daten wie das Robotermodell, Betriebsstunden, aktuelle Achswerte (zur Ermittlung einer Startposition), angefügte Tools etc. verfügbar und werden an die Cloud-Simulationsumgebung übertragen. Hieraus kann die Simulationsumgebung die Simulation im Hinblick auf den Roboter konfigurieren (CAD-Modell, Dynamikparameter, Tools, aktuelle Achskonfiguration, evtl. geänderte Dynamikparameter durch Lebensdauer etc.)

In einem zweiten Schritt (Fig. 3: S20) wird das Umweltmodell erfasst. Hier stehen in einer Ausführung mehrere Möglichkeiten zur Auswahl:
- Übertragung eines vollständig modellierten CAD Modells inkl. Transformation zum Roboterkoordinatensystem;
- Erfassung der Umwelt durch eine 3D Kamera, die entweder von einem Menschen handgeführt wird oder am Roboter montiert ist, der
   - handgeführt wird oder
   - eine definierte und kollisionsfreie Trajektorie abfährt

Im Falle einer Handführung ist es auch möglich, für die Aufgabe wichtige Bereiche, zum Beispiel ein Fügeziel, genauer und aus wenig Abstand aufzunehmen.

Das somit generierte Umweltmodell wird nun ebenfalls an die Cloud-Simulationsumgebung übertragen. Eine einfache Möglichkeit ist hier, die Daten ebenfalls in der Verwaltungsschale des Roboters abzulegen.

In einer Abwandlung hat die Roboterzelle eine Verwaltungsschale 10 (vgl. Fig. 2), das Umweltmodell und Referenzen auf beteiligte andere Verwaltungsschalen. Somit ist der Roboter selbst austauschbar und das Ganze ist modularer aufgebaut, als wenn alle Informationen in der Verwaltungsschale des Roboters selbst liegen. Der "Cell-Manager" kann dann die Interaktion mit den Subkomponenten, der Simulationsumgebung 20 (vgl. Fig. 2) und die Ausführung des Lernprozesses regeln.

In einem dritten Schritt (Fig. 3: S30) wird das Lernziel definiert. Dabei wird eine Kostenfunktion vorgegeben, so dass der Reinforcement Algorithmus sein Ziel kennt. Insbesondere ist es möglich, in dem geführten Wizard, z.B. das Ziel dadurch vorzugeben, dass der Nutzer den Roboter zum Fügeziel handführt und dies einige Male wiederholt, um Fehler zu minimieren.

Eine manuelle Demonstration wird in einer Ausführung, je nach Reinforcement-Learning Algorithmus, auch zu einer Initialisierung des Algorithmus oder einem Inverse Reinforcement Learning der Kostenfunktion verwendet. Die Trajektorien der Demonstrationen können ebenfalls in der Verwaltungsschale hinterlegt werden.

In einem vierten Schritt (Fig. 3: S40) wird in der Cloud-Umgebung 4, vorzugsweise parallelisiert, mittels Verfahren des Deep Reinforcement Learnings der Task gelernt.

Der konkrete Algorithmus ist vorteilhafterweise
- Guided Policy Search;
- Soft Q-Learning;
- A3C
oder dergleichen.

Um die Simulation-Reality Gap zu überwinden, wird in einer Ausführung eine Randomisierung der Dynamik- Parameter vorgenommen. Ist ein Vision-System beteiligt, wird in einer Ausführung mittels Domain Randomization ein flexibles Visionmodell erlernt.

Ein geometrischer Pfadplaner kann kontaktfreie Pfadelemente planen und im Falle der Guided Policy Search die Linear Quadratic Gaussian Controllers initialisieren.

Das Ergebnis des Algorithmus sind die Struktur des neuronalen Netzes und die trainierten Gewichte eines neuronalen Netzes. In einer Abwandlung können für ein späteres Finetuning Progressive Nets verwendet werden. Die Ergebnisse der Simulation werden an den Roboter / Edge Controller zurück gesendet.

In einem fünften Schritt (Fig. 3: S50) wird das Modell auf den Roboter oder einen Edge Controller heruntergeladen.

Das trainierte Modell kann nun rückgespielt werden. In der Verwaltungsschale der Simulationsinstanz können auch Parameter der Simulation und des Lernalgorithmus bereitgestellt werden (z.B. Lernrate, Anzahl Iterationen etc., die später beim Finetuning verwendet werden können). Insbesondere kann für den Austausch des Computation Graphs und der Gewichte beispielsweise das ONNX Austauschformat verwendet werden.

In einem optionalen sechsten Schritt (Fig. 3: S60) wird das Modell auf dem realen System fine-getuned.

Je nach Qualität der Simulation ist das Modell direkt ready-to-use oder wird auf dem realen System weiter fine-getuned. D.h. der Reinforcement Learning Algorithmus wird auf dem realen System weiter trainiert, wobei eine Initialisierung durch die Gewichte und andere Parameter des Reinforcement-Algorithmus vorteilhaft ist.

In einem siebten Schritt (Fig. 3: S70) kann der gelernte Task nun ausgeführt werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

## Patentansprüche

1. Verfahren zum Konfigurieren einer Steuerung (2) eines Roboters (1) zum Durchführen einer vorgegebenen Aufgabe, mit den Schritten:
Erfassen (S10, S20) wenigstens eines Roboterparameters und wenigstens eines Umweltmodelparameters;
Trainieren (S40) eines Agenten mithilfe wenigstens einer Simulation auf Basis des erfassten Roboterparameters und Umweltmodelparameters mittels maschinellen Lernens auf Basis einer vorgegebenen Kostenfunktion; und
Konfigurieren (S50) der Steuerung des Roboters auf Basis des trainierten Agenten wobei
die vorgegebene Aufgabe wenigstens eine Bewegung des Roboters aufweist; und
der Agent mithilfe von Reinforcement Learning trainiert wird;
**dadurch gekennzeichnet, dass**
der Roboterparameter und/oder Umweltmodelparameter in einer Verwaltungsschale gespeichert ist;
mehrere der Verfahrensschritte eine Anwendereingabeunterstützung durch einen Wizard aufweisen; und
das Vorgeben der Kostenfunktion umfasst, dass in dem Wizard ein Nutzer den Roboter zu einem Fügeziel handführt und dies einige Male wiederholt.

2. Verfahren nach Anspruch 1, **dadurch gekennzeichnet, dass** die vorgegebene Aufgabe wenigstens einen planmäßigen Umgebungskontakt des Roboters, aufweist.

3. Verfahren nach einem der vorhergehenden Ansprüche, **dadurch gekennzeichnet, dass**
der Roboterparameter einen kinematischen, insbesondere dynamischen, Roboter- und/oder Lastmodellparameter, eine aktuelle Roboterpose und/oder -betriebszeit aufweist; und/oder
der Umweltmodelparameter einen CAD-Modellparameter und/oder eine Roboterpositionierung in dem Umgebungsmodell aufweist; und/oder mithilfe wenigstens eines optischen Sensors ermittelt wird.

4. Verfahren nach dem vorhergehenden Anspruch, **dadurch gekennzeichnet, dass** der optische Sensor von einer Person oder einem, insbesondere handgeführten, Roboter geführt wird.

5. Verfahren nach einem der vorhergehenden Ansprüche, **dadurch gekennzeichnet, dass** der Agent ein künstliches neuronales Netz aufweist, insbesondere die Steuerung des Roboters auf Basis der Struktur und/oder Gewichtungen des trainierten Netzes konfiguriert wird,

6. Verfahren nach einem der vorhergehenden Ansprüche, **dadurch gekennzeichnet, dass** die konfigurierte Steuerung des Roboters mittels maschinellem Lernen, insbesondere Reinforcement Learning, mithilfe des Roboters weiter trainiert wird (S60).

7. Verfahren nach einem der vorhergehenden Ansprüche, **dadurch gekennzeichnet, dass** wenigstens der Roboterparameter und/oder Umweltmodelparameter in einer Daten-Cloud gespeichert ist.

8. Verfahren zum Durchführen einer vorgegebenen Aufgabe mithilfe wenigstens eines Roboters, **dadurch gekennzeichnet, dass** eine Steuerung des Roboters nach einem Verfahren nach einem der vorhergehenden Ansprüche konfiguriert ist.

9. System, das zur Durchführung eines Verfahrens nach einem der vorhergehenden Ansprüche eingerichtet ist.

10. Computerprogrammprodukt mit einem Programmcode, der auf einem von einem Computer lesbaren Medium gespeichert ist, zur Durchführung eines Verfahrens nach einem der vorhergehenden Ansprüche 1-8.

## Claims

1. A method of configuring a control facility (2) of a robot (1) for carrying out a specified task, the method comprising the steps of:
detecting (S10, S20) at least one robot parameter and at least one environment model parameter;
training (S40) an agent with the aid of at least one simulation on the basis of the detected robot parameter and the detected environment model parameter by means of machine learning on the basis of a specified cost function; and
configuring (S50) the control facility of the robot on the basis of the trained agent,
wherein
the specified task comprises at least one movement of the robot; and
the agent is trained with the aid of reinforcement learning;
**characterised in that**
the robot parameter and / or the environment model parameter are stored in an asset administration shell;
several of the process steps comprise a user input support by means of a wizard; and
the specifying of the cost function comprises a user guiding the robot by hand to a joining target in the wizard and repeating this a few times.

2. The method according to claim 1, **characterised in that** the specified task comprises at least one planned environment contact by the robot.

3. The method according to any one of the preceding claims, **characterised in that** the robot parameter comprises a kinematic, in particular a dynamic, robot parameter and / or load model parameter, a current robot pose and / or a current time of operation; and / or
the environment model parameter comprises a CAD model parameter and / or a robot positioning in the environment model; and / or
is determined with the aid of at least one optical sensor.

4. The method according to the preceding claim, **characterised in that** the optical sensor is guided by a person or a robot, in particular a robot guided by hand.

5. The method according to any one of the preceding claims, **characterised in that** the agent comprises an artificial neural network, and in particular **in that** the control facility of the robot is configured on the basis of the structure and / or the weightings of the trained network.

6. The method according to any one of the preceding claims, **characterised in that** the configured control facility of the robot is further trained (S60) by means of machine learning, in particular by reinforcement learning, with the aid of the robot.

7. The method according to any one of the preceding claims, **characterised in that** the robot parameter and / or the environment model parameter is stored in a data cloud.

8. A method of carrying out a specified task with the aid of at least one robot, **characterised in that** a control facility of the robot is configured according to a method according to any one of the preceding claims.

9. A system set up to carry out a method according to any one of the preceding claims.

10. A computer program product with a program code that is stored on a computer readable medium for carrying out a method according to any one of the preceding claims 1 to 8.

## Revendications

1. Procédé de configuration d'une commande (2) d'un robot (1) pour effectuer une tâche prédéfinie, avec les étapes :
la saisie (S10, S20) d'au moins un paramètre de robot et d'au moins un paramètre de modèle environnemental ;
l'entraînement (S40) d'un agent à l'aide d'au moins une simulation sur la base des paramètres de robot et paramètres de modèle environnemental saisis par apprentissage automatique sur la base d'une fonction de coût prédéfinie ; et
la configuration (S50) de la commande du robot sur la base de l'agent entraîné, dans lequel
la tâche prédéfinie présente au moins un mouvement du robot ; et
l'agent est entraîné à l'aide de l'apprentissage par renforcement ;
**caractérisé en ce que**
le paramètre de robot et/ou paramètre de modèle environnemental est stocké dans une enveloppe de gestion ;
plusieurs des étapes de procédé présentent une assistance à l'entrée d'utilisateur via un assistant ; et
la prédéfinition de la fonction de coût implique qu'un utilisateur guide le robot à la main vers une cible d'assemblage dans l'assistant et répète cela plusieurs fois.

2. Procédé selon la revendication 1, **caractérisé en ce que** la tâche prédéfinie présente au moins un contact planifié avec l'environnement du robot.

3. Procédé selon quelconque des revendications précédentes, **caractérisé en ce que**
le paramètre de robot présente un paramètre cinématique, en particulier dynamique, de robot et/ou de modèle de charge, une pose de robot et/ou un temps de fonctionnement actuels ; et/ou
le paramètre de modèle environnemental présente un paramètre de modèle CAO et/ou un positionnement de robot dans le modèle environnemental ; et/ou
est déterminé à l'aide d'au moins un capteur optique.

4. Procédé selon la revendication précédente, **caractérisé en ce que** le capteur optique est guidé par une personne ou un robot, notamment à la main.

5. Procédé selon quelconque des revendications précédentes, **caractérisé en ce que** l'agent présente un réseau neuronal artificiel, en particulier la commande du robot est configurée sur la base de la structure et/ou des pondérations du réseau entraîné.

6. Procédé selon quelconque des revendications précédentes, **caractérisé en ce que** la commande configurée du robot est davantage entraînée à l'aide du robot par apprentissage automatique, en particulier par apprentissage par renforcement (S60).

7. Procédé selon quelconque des revendications précédentes, **caractérisé en ce que** le paramètre de robot et/ou paramètre de modèle environnemental est stocké dans un nuage de données.

8. Procédé pour effectuer une tâche prédéfinie à l'aide d'au moins un robot, **caractérisé en ce qu'**une commande du robot est configurée selon un procédé selon quelconque des revendications précédentes.

9. Système, qui est conçu pour mettre en œuvre un procédé selon quelconque des revendications précédentes.

10. Produit-programme d'ordinateur avec un code de programme qui est stocké sur un support lisible par un ordinateur pour mettre en œuvre un procédé selon quelconque des revendications 1 à 8 précédentes.
